# EUROPEAN PATENT APPLICATION

(11) **EP 1 588 821 A1**
(43) Date of publication of application: **26.10.2005**
(21) Application number: 03778807.2
(22) Date of filing: 11.12.2003
(51) Int. Cl.: B29C 39/34, B29C 39/36, B29C 39/10, B29K 75/00

(54) **METHOD OF PRODUCING FOAM-MOLDED PRODUCT, METALLIC MOLD, AND COMPONENT FOR METALLIC MOLD**

(30) Priority: 25.12.2002 JP 2002374768; 25.12.2002 JP 2002374769; 25.12.2002 JP 2002374770; 25.12.2002 JP 2002374771; 25.12.2002 JP 2002374772
(71) Applicant: Bridgestone Corporation, Tokyo 104-8340 (JP)
(72) Inventor: KUBOTA, Hiroyuki c/o Yokohama Plant,, Yokohama-shi, Kanagawa 244-0812 (JP)
(74) Representative: Whalley, Kevin
(86) International application number: PCT/JP2003/015863
(87) International publication number: WO 2004/058474

(57) **Abstract**

A method of producing a foamed molded product such as an urethane foam with the fastener smoothly with high yields; a mold for molding the same; and a mold component thereof are provided. In a female mold, a rail is fixed to a mounting eye disposed at a side surface of a cavity. A fastener is disposed at a bottom of a recess in the rail. After the fastener is held by the rail, an urethane stock liquid is injected and foamed. After the foaming, the urethane foam is demolded. Upon the demolding, the movable part is moved forward to push and compress the urethane foamed product within an undercut part. With this configuration, the mounting eye and the rail do not interfere the molded product within the undercut part, whereby the urethane foam is smoothly demolded without cracking.

## Description

### Field of the Invention

The present invention relates to a method of producing a foamed molded product, a mold for molding the same and a mold component thereof. More particularly, the present invention relates to a method of producing a foamed molded product such that a fastener, i.e., a hook-and-loop fastener, is integrally molded with a foamed molded product such as a vehicle sheet pad; a mold for molding the same; and a mold component thereof.

### BACKGROUND OF THE INVENTION

Foamed molded products made of synthetic resin including urethane are widely used as vehicle cushioning materials. One of the foamed molded products is produced using a mold comprising a female mold and a male mold that is disposed attachably/detachably over an opening of the female mold including a cavity formed between the male and female molds. Specifically, the foamed molded product is produced by providing a foaming molding material comprising a synthetic resin to the cavity, closing the male and female molds, and foaming, curing and demolding the foaming molding material, as disclosed in Japanese Unexamined Patent Application Publication No. 2002-160235.

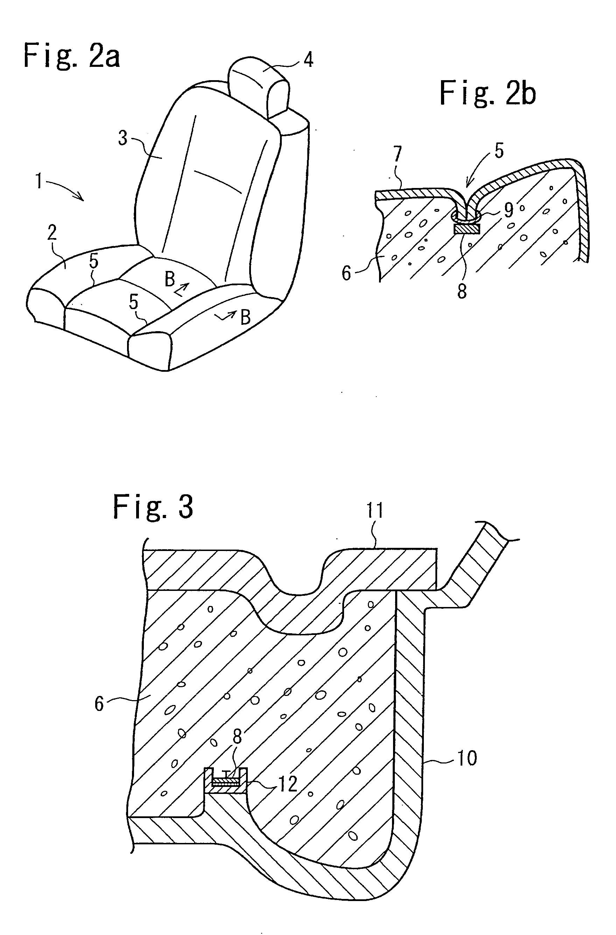

A skin material may be disposed on the foamed molded product. For example, a cushioning material comprising a foamed urethane to which the skin material such as a fabric is added is used for interior equipment of a sheet or a door in various vehicle. The skin material may be added attachably/detachably to the foamed urethane with a fastener, i.e., a hook-and-loop fastener, fixed to the urethane. Especially when a hand-grip design is disposed on the sheet, the hand-grip design is positioned at a recessed part into which the hand-grip design is recessed from the molded product, as shown in Figs. 2A and 2B. Fig. 2A is a perspective view of a sheet 1, and Fig. 2B is a sectional view taken along B-B line.

The sheet 1 is equipped with a sheet cushion 2, a sheet back 3 and a head rest 4. A hand-grip design 5 is disposed on a top surface of the sheet cushion 2 and a front surface of the sheet back 3. The sheet 1 comprises an urethane foam 6 and a skin material 7 disposed thereon. The hand-grip design 5 has a recessed pattern that is recessed from the sheet surface. A fastener 8 is disposed on the urethane foam 6 so that the fastener 8 faces toward a bottom surface of the hand-grip design 5. A fastener 9 disposed on the skin material 7 is connected to the fastener 8. The fastener 8 is integrally molded with the urethane foam 6. Each of the fasteners 8 and 9 has a belt-type base and engaging protrusions, i.e., hooks or loops, disposed on one surface, i.e., fastening surface, of the base. When the hooks and loops are engaged, the fasteners 8 and 9 are connected.

Conventionally, in order to arrange the above-described fasteners on the surface of the urethane foam, the urethane and the fasteners are integrally molded. In this case, the fastening surface is covered with a rail 12 having a recessed section to prevent the liquid foaming material from invading to the fastening surface between the fasteners 8 and 9, and then the liquid foaming resin material is flowed into the mold.

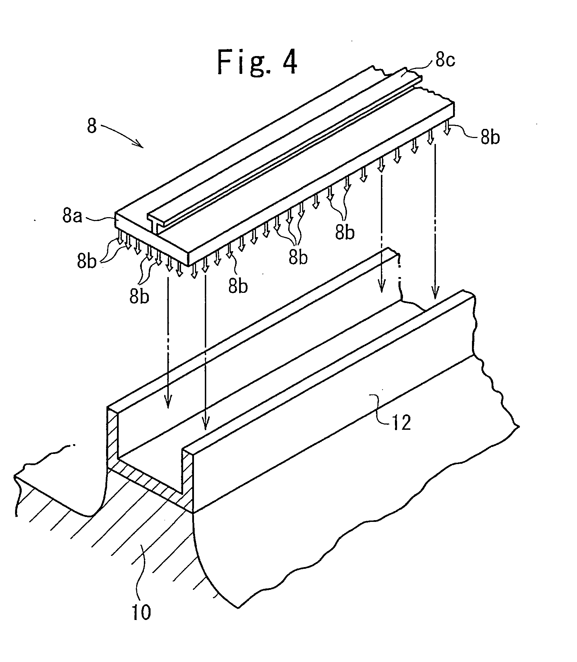

Figs. 3 and 4 illustrate the conventional method. Fig. 3 is a sectional view of the mold after foaming, and Fig. 4 is a perspective view showing an engagement between the fastener 8 and the rail 12. In this method, a mold having a female mold 10 and a male mold 11 is used, and the fastener 8 is integrally attached to the urethane foam 6 which is the foamed molded product.

The rail 12 is fixed to the female mold 10, and the fastener 8 is held by the rail 12. The rail 12 has a channel-shape recessed groove. When the engagement protrusions 8b disposed on one surface of a base 8a are inserted into the rail 12 so that they point downward, as shown in Fig. 4. An anchor 8c disposed on an opposite surface of the base 8a point upward.

After the urethane is foamed, the molded product is demolded in an upper direction in Figs. 3 and 4.

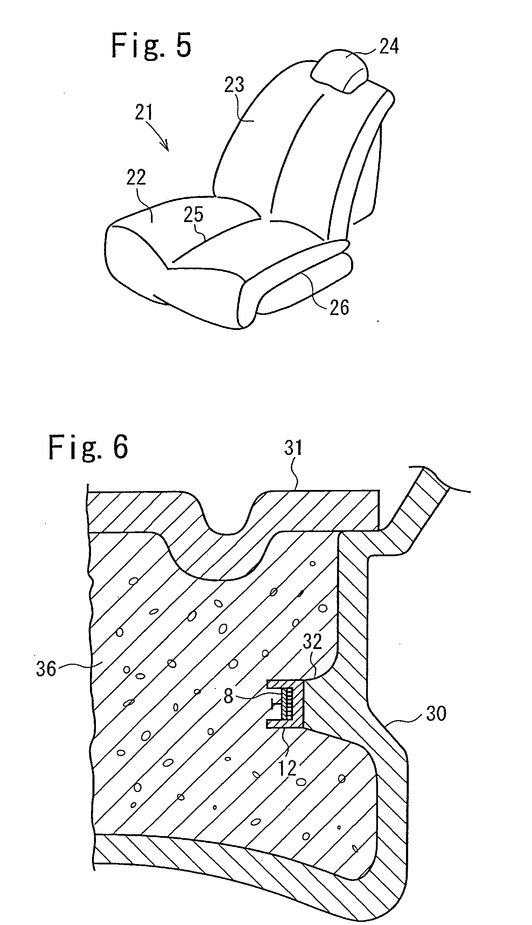

It is contemplated that a sheet 21 has an another hand-grip design on a side surface of the sheet, as shown in Fig. 5. The sheet 21 equipped with a sheet cushion 22, a sheet back 23 and a head rest 24. Hand-grip designs 25 and 26 are disposed on a top surface and a side surface of the sheet cushion 22.

In order to form the hand-grip design 26 at the side surface of the sheet, the rail 12 is attached laterally to a mounting eye 32 disposed at a side surface of a female mold 30, and the fastener 8 is fitted into the rail 12, as shown in Fig. 6. A male mold 31 covers the female mold 30.

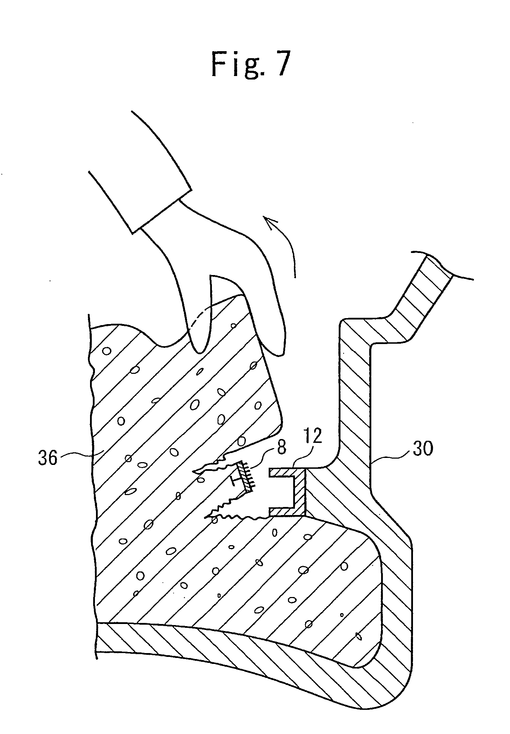

After the urethane is foamed, an urethane foam 36 is demolded in an upper direction in Fig. 6. In this case, the rail 12 is protruded far from the side surface of the cavity. Therefore, when the urethane foam 36 is pulled upward, the rail 12 drags the urethane under the rail 12 to split the urethane foam 36 along the edges of the fastener 8, as shown in Fig. 7. When the fastener may not be successfully taken from the rail, the fastener may be detached from the urethane foam.

Also, in the above-described conventional method, since the fastener 8 is inserted into the rail 12 within the mold, the insertion is not easily done, resulting in low work effectiveness.

### SUMMARY OF THE INVENTION

Accordingly, it is an object of the present invention to provide a method of producing a foamed molded product that can be demolded smoothly without splitting, when protrusions of a rail is disposed at a side surface of a cavity so that they protrude vertically to a demolded direction; a mold for molding the same; and a mold component thereof.

It is an another object of the present invention to provide a method of producing a foamed molded product having a fastener that can improve work effectiveness of attaching the fastener and production effectiveness of the foamed molded product having the fastener in one embodiment; a mold for molding the same; and a mold component thereof.

A first aspect of the present invention is a method of producing a foamed molded product, comprising the steps of: providing a foaming resin material to a mold having a convex part on a cavity surface and an undercut part disposed adjacent to the convex part, foaming the foaming resin material to provide a foamed molded product, and demolding the foamed molded product in a direction from the undercut part to the convex part, wherein the undercut part is capable of advancing from the cavity surface, and the undercut part advances during the demolding to press the foamed molded product on the undercut part.

The mold for molding a foamed molded product according to the first aspect of the present invention comprises a convex part on a cavity surface, an undercut part disposed adjacent to the convex part, and an advancing mechanism for advancing the undercut part, wherein the foamed molded product is demolded in a direction from the undercut part to the convex part.

In the method of producing a foamed molded product and the mold according to the first aspect of the present invention, the undercut part on the cavity surface advances upon the demolding, whereby the molded product such as an urethane foam can be smoothly demolded without cracking.

Upon the demolding, the under cut part preferably advances to the same position of or forward over the convex part.

A suitable mechanism for advancement includes, but not limited to, a cylinder.

A second aspect of the present invention is a method of producing a foamed molded product, comprising the steps of: providing a foaming resin material to a mold having a convex part on a cavity surface and an undercut part disposed adjacent to the convex part, foaming the foaming resin material to provide a foamed molded product, and demolding the foamed molded product in a direction from the undercut part to the convex part, wherein the convex part is capable of rotating in a demolding direction, and the convex part is rotated in the demolding direction during demolding of the molded product.

The mold for molding a foamed molded product according to the second aspect of the present invention comprising: a convex part on a cavity surface, and an undercut part disposed adjacent to the convex part, wherein the foamed molded product is demolded in a direction from the undercut part to the convex part, and the convex part is capable of rotating in a demolding direction.

In the method of producing a foamed molded product and the mold according to the second aspect of the present invention, the convex part on the cavity surface is capable of rotating in a demolding direction upon the demolding, whereby the molded product such as an urethane foam can be smoothly demolded without cracking.

Preferably, the convex part in the mold is capable of rotating freely, and rotates when the molded product is moved upon the demolding.

Preferably, the mold has a male mold and a female mold, the convex part and the undercut part are disposed on the female mold, the convex part is disposed at an interface between the male and female molds, and the male mold presses the convex part, whereby the convex part is fixed when the male mold and the female mold are clamped.

A third aspect of the present invention is a method of producing a foamed molded product, comprising the steps of: providing a foaming resin material to a mold having a convex part on a cavity surface and an undercut part disposed adjacent to the convex part, foaming the foaming resin material to provide a foamed molded product, and demolding the foamed molded product in a direction from the undercut part to the convex part, wherein the convex part is formed by attaching a separate member for forming the convex part to the mold, and the member is taken out from the mold together with the molded product upon demolding, and the molded product is removed from the member.

In the method of producing a foamed molded product according to the third aspect of the present invention, the member for forming the convex part is taken out from the mold together with the molded product, and the member is taken out from the molded product, whereby the molded product such as an urethane foam can be smoothly demolded without cracking.

According to the present invention, the member for forming the convex part may have a fastener holding part, a fastener may be held by the fastener holding part before the member is attached to the mold, the member holding the fastener may be attached to the mold, and then the foaming step may be conducted. Thus, the fastener can be attached to the member for forming the convex part at the outside of the mold, whereby work effectiveness of attaching the fastener and production effectiveness of the foamed molded product having the fastener are improved.

A fourth aspect of the present invention is a mold component attachable/detachable to/from a cavity of a mold for use in a method of producing a foamed molded product comprising the steps of providing a foaming resin material to the mold having a convex part on the cavity surface and an undercut part disposed adjacent to the convex part, foaming the foaming resin material to provide a foamed molded product, and demolding the foamed molded product in a direction from the undercut part to the convex part, wherein the component is a member for forming the convex part to the mold.

A fifth aspect of the present invention is a mold for use in a method of producing a foamed molded product, comprising the steps of providing a foaming resin material to a mold having a convex part on a cavity surface and an undercut part disposed adjacent to the convex part, foaming the foaming resin material to provide a foamed molded product, and demolding the foamed molded product in a direction from the undercut part to the convex part, wherein the convex part is formed by attaching a separate member for forming the convex part to the mold.

When the mold component and the mold according to fourth and fifth embodiments of the present invention are used to form the foamed molded product, the member for forming the convex part is taken out from the mold together with the molded product, and the member is taken out from the molded product, whereby the molded product such as an urethane foam can be smoothly demolded without cracking. In addition, a foamed molded product having a different shape can be molded by using a member for forming a convex part having a different shape.

According to the present invention, the member for forming the convex part may have a fastener holding part, a fastener may be held by the fastener holding part before the member is attached to the mold, the member holding the fastener may be attached to the mold, and then the foaming step may be conducted. Thus, the fastener can be attached to the member for forming the convex part outside the mold, whereby work effectiveness of attaching the fastener and production effectiveness of the foamed molded product having the fastener are improved.

According to the present invention, it is preferable that the member for forming the convex part be held by the mold by means of magnetic force.

### BRIEF DESCRIPTION OF THE DRAWINGS

Figs. 1A and 1B are sectional views of a mold for use in a method of producing a foamed molded product according to the present invention;
Fig. 2A is a perspective view of a vehicle sheet;
Fig. 2B is a sectional view taken along B-B line of Fig. 2A;
Fig. 3 is a sectional view showing a method of molding a sheet shown in Fig. 5;
Fig. 4 is a perspective view showing a method of molding a sheet shown in Fig. 5;
Fig. 5 is a perspective view of a vehicle sheet;
Fig. 6 is a sectional view showing a method of molding a sheet shown in Fig. 5;
Fig. 7 is an illustration of a method of demolding the molded sheet shown in Fig. 5;
Figs. 8A and 8B are sectional views of a foamed molded product for use in a method of producing a foamed molded product according to the present invention; and
Figs. 9A and 9B are sectional views of a foamed molded product for use in a method of producing a foamed molded product according to the present invention.

### DESCRIPTION OF THE PREFERRED EMBODIMENTS

### FIRST EMBODIMENT

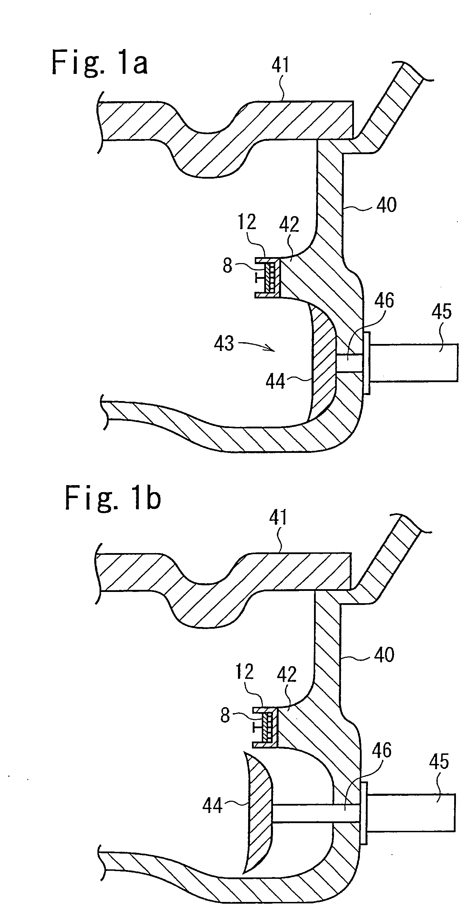

Figs. 1A and 1B are sectional views of a mold for use in a method of producing a foamed molded product according to the first aspect. Fig. 1A shows a movable part in a backward position, and Fig. 1B shows a movable part in a forward position.

In this embodiment, a sheet having a hand-grip design 26 is formed on a side surface as shown in Fig. 5. A mold has a female mold 40 and a male mold 41. A rail 12 is fixed to a mounting eye 42 disposed at a side surface of a cavity in the female mold 40. A fastener 8 is disposed at a bottom of a recess in the rail 12.

The mounting eye 42 and the rail 12 form a convex part protruding from the side surface of the cavity. An undercut part 43 is an area adjacent to a lower side of the convex part.

A movable part 44 is facing to the undercut part 43 on the side surface of the cavity in the female mold 40, and is attached to a tip of a piston rod 46 of a cylinder 45. The cylinder 45 is fixed to the female mold 40. When the piston rod 46 is moved backward to a backward limit position, the movable part 44 is tightly contacted with the female mold 40. When the piston rod 46 is moved forward to a forward limit position, a front surface of the movable part 44 is nearly flush with a front surface of the rail 12. The cylinder 45 may have larger size so that the front surface of the movable part 44 advances exceeding the front surface of the rail 12. Examples of the cylinder is an air cylinder, a hydraulic cylinder and the like.

As shown in Fig. 1A, the fastener 8 is held by the rail 12 under the condition that the movable part 44 is moved backward. Then, an urethane stock liquid is injected and foamed. After the foaming, the urethane foam is demolded. Upon the demolding, the male mold 41 is removed, and the movable part 44 is moved forward to push and compress the urethane foamed product (not shown) within the undercut part 43, as shown in Fig. 1B. With this configuration, the mounting eye 42 and the rail 12 do not interfere the molded product within the undercut part 43, whereby the urethane foam is smoothly demolded without cracking.

When the movable part 44 is moved forward so that is flush with or over the rail 12 to compress the urethane within the undercut part 43, the fastener 8 is also out from the rail 12 and thus is demolded smoothly without snagging by the rail 12.

It should be understood that the above-described embodiment is given by way of illustration only, and is not intended to be limiting thereof.

For example, any advancing mechanisms for advancing the movable part other than the cylinder may be used. The present invention can be applied to any molded products other than the foamed molded product with the fastener.

As described above, according to the present invention, the foamed molded product, i.e., urethane foam, with the fastener can be produced smoothly with high yields.

### SECOND EMBODIMENT

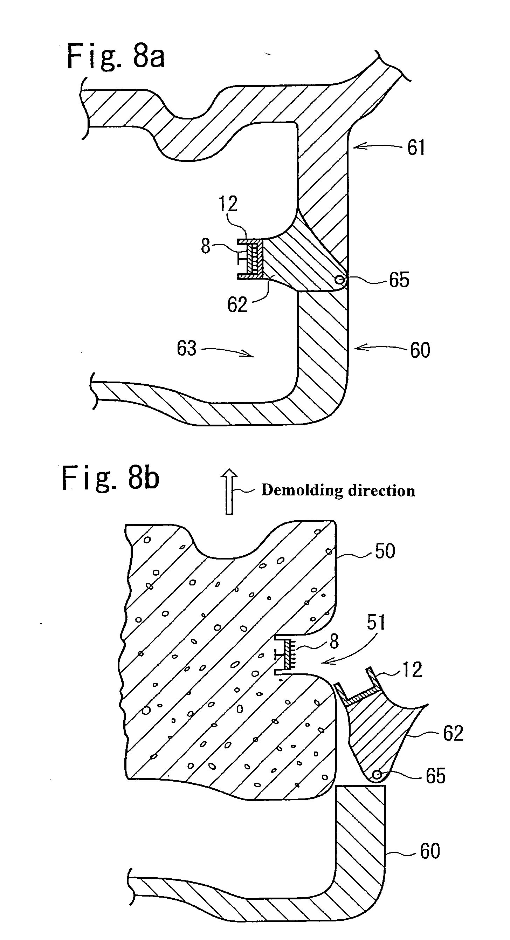

Figs. 8A and 8B are sectional views of a foamed molded product for use in a method of producing a foamed molded product according to the second aspect of the present invention. Fig. 8A shows a mold-mounting status, and Fig. 8B shows a demolding status.

In this embodiment, a sheet having a hand-grip design 26 is formed on a side surface as shown in Fig. 5. A mold has a female mold 60 and a male mold 61. A rail 12 is fixed to a mounting eye 62 disposed at a side surface of a cavity in the female mold 60. A fastener 8 is disposed at a bottom of a recess in the rail 12.

The mounting eye 62 and the rail 12 form a convex part protruding from the side surface of the cavity. An undercut part 63 is an area adjacent to a lower side of the convex part.

In this embodiment, the convex part is disposed at an interface between the female mold 60 and the male mold 61. A back end (an opposite side of the cavity) of the mounting eye 62 is connected to the female mold 60 via a spindle 65 in a free rotation mode. The convex part rotates freely around the spindle 65 in a demolding direction (an upper direction in Fig. 8B).

As shown in Fig. 8A, when the molds are clamped, the mounting eye 62 overlaps with a top end surface of a body of the female mold 60. The mounting eye 62 is contacted tightly with the male and female molds 61, 60 by pushing down the male mold 61, and overlapping a bottom end surface of the male mold 61 with the mounting eye 62 to press the mounting eye 62 to the top surface of the body of the female mold 60.

As shown in Fig. 8A, the fastener 8 is held by the rail 12. In this case, when the mounting eye 62 can be rotated in an upward direction, the fastener 8 can be easily mounted on the rail 12. Then, an urethane stock liquid is injected and foamed, and the male mold 61 is clamped for foaming. After the foaming, an urethane foam molded product 50 is demolded.

In order to demold, after the male mold 61 is moved upward and is opened, the molded product 50 is pushed up and is taken out from the female mold 60. The mounting eye 62 rotates freely around the spindle 65. Therefore, when the molded product 50 moves upward, the convex parts including the rail 12 and the mounting eye 62 are dragged by the molded product 50, and rotate upward. Thus, the urethane foam molded product 50 is not caught by the rail 12 and the mounting eye 62, and is demolded smoothly without cracking.

Upon the demolding, the fastener 8 is taken out from the rail 12, and is disposed at a deep position of a recessed part 51 formed on the molded product 50.

It should be understood that the above-described embodiment is given by way of illustration only, and is not intended to be limiting thereof. For example, the contact part between the mounting eye 62 and the male mold 61 tilts downward toward the outside of the mold in Fig. 8A. However, the contact part may be horizontal, or tilt upward toward the outside of the mold. Also, the contact part between the mounting eye 62 and the female mold 60 may tilt.

In this embodiment, the convex part includes the mounting eye 62 and the rail 12, both of which may be integrated. The present invention can be applied to any molded products other than the foamed molded product with the fastener.

As described above, according to the present invention, the foamed molded product such as the urethane foam with the fastener can be produced smoothly with high yields.

### THIRD TO FIFTH EMBODIMENTS

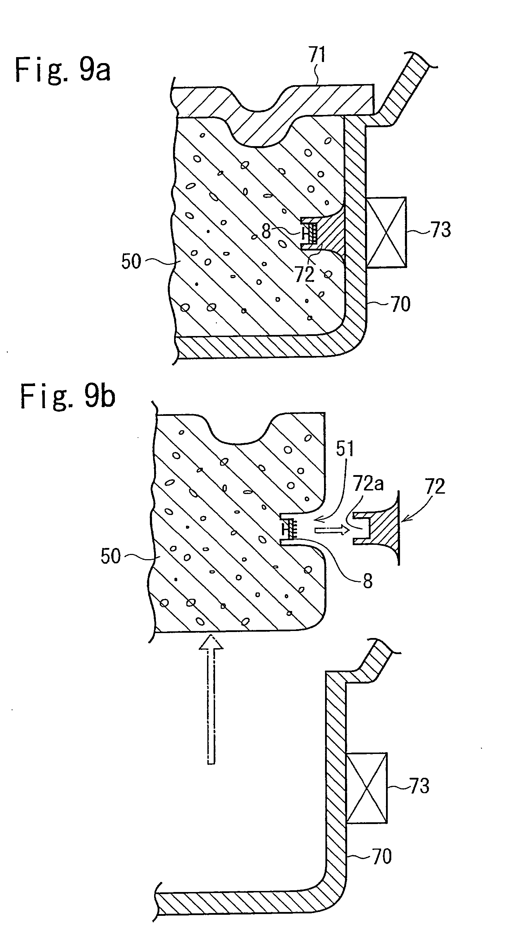

Figs. 9A and 9B are sectional views of a foamed molded product for use in a method of producing a foamed molded product according to the third to fifth aspects of the present invention. Fig. 9A shows a state before demolding, and Fig. 9B shows a demolding status.

In this embodiment, a sheet having a hand-grip design 26 is formed on a side surface as shown in Fig. 5.

A mold has a female mold 70 and a male mold 71. A rail 72 is disposed as a member for forming a convex part at a side surface of a cavity in the female mold 70. The rail 72 is made of a ferromagnetic material such as iron and an iron alloy, may include a magnet, and is a bar-shaped member extending along the cavity surface.

A magnet 73 disposed at an external surface of the female mold 70. The rail 72 is held on the female mold 70 by a magnetic force of the magnet 73. Not shown in the schematic diagram are a very shallow concave portion at one of the female mold 70 and the rail 72, and a very low convex portion at the other. The rail 72 can be positioned by engaging the convex and concave portions. With the very shallow concave portion and the very low convex portion, the rail 72 can be released smoothly from the female mold 70 without snagging the concave and convex portions upon the demolding.

A fastener holding part 72a having a groove shape (recessed profile) is disposed at the rail 72 for holding the fastener 8.

Upon the molding, the fastener 8 is held by the fastener holding part 72a at the rail 72, and the rail 72 is disposed at the predetermined position of the cavity surface, is attracted to the female mold 70 by the magnetic force of the magnet 73, and is secured.

Then, an urethane stock liquid is injected, and the male mold 71 is clamped for foaming. Thereafter, the male mold 71 is mold-released, and the urethane foam 50 is taken out from the female mold 70. The rail 72 is also taken out from the female mold 70 together with the urethane foam 50. Thus, the rail 72 is mold-released from the female mold 70 together with the urethane foam 50, whereby the urethane foam 50 is not dragged by the cavity surface, and is smoothly demolded without cracking.

Then, the rail 72 is taken out from the urethane foam 50 to provide the urethane foam 50 with the fastener 8.

In this embodiment, an electromagnet may be used instead of the magnet 73. In this case, upon the molding, the fastener 8 is held by the fastener holding part 72a at the rail 72, and the rail 72 is disposed at the predetermined position and the electromagnet 73 is energized, whereby the rail 72 is attracted to the female mold 70 and is secured.

Then, an urethane stock liquid is injected and foamed, and the male mold 71 is clamped for foaming. Thereafter the urethane foam is demolded. Upon the demolding, the female mold 71 is mold-released, the electromagnet 73 is stopped to be energized and demagnetized, and the urethane foam 50 is taken out from the female mold 70. Since the electromagnet 73 is demagnetized, the rail 72 is taken out from the female mold 70 together with the urethane foam 50. Thus, the rail 72 is mold-released from the female mold 70 together with the urethane foam 50, whereby the urethane foam 50 is not dragged by the cavity surface, and is smoothly demolded without cracking.

Then, the rail 72 is taken out from the urethane foam 50 to provide the urethane foam 50 with the fastener 8.

Alternatively, the rail 72 may be energized to be a magnet, whose magnetic force is used to hold it in the mold. In this case, it is preferable that the electromagnet be energized upon the demolding, and produce a magnetic flux in a direction opposite to that from the rail 72.

It should be understood that the above-described embodiments are given by way of illustration only, and are not intended to be limiting thereof. For example, the rail 72 may be held at the female mold 70 by a mechanical lock mechanism other than the magnet. In this case, an engagement for a lock member including a key groove may be disposed on the rail 72. Also, the rail 72 may be constructed as a combination of a base part and the rail 12 shown in Fig. 6. The present invention can be applied to any molded products having a recessed part other than the foamed molded product with the fastener.

As described above, according to the present invention, the foamed molded product such as the urethane foam with the fastener can be produced smoothly with high yields.

## Claims

1. A method of producing a foamed molded product, comprising the steps of:
providing a foaming resin material to a mold having a convex part on a cavity surface and an undercut part disposed adjacent to the convex part,
foaming the foaming resin material to provide a foamed molded product, and
demolding the foamed molded product in a direction from the undercut part to the convex part,
wherein the undercut part is capable of advancing from the cavity surface, and the undercut part advances during the demolding to press the foamed molded product on the undercut part.

2. A method according to Claim 1, wherein the undercut part advances to the same position of or forward over the convex part.

3. A method according to Claim 1, wherein the undercut part advances by means of a cylinder.

4. A method according to Claim 1, wherein the mold has a male mold and a female mold, and the convex part and the undercut part are disposed on the female mold.

5. A method according to any one of Claims 1 to 4, wherein the resin is urethane.

6. A mold for molding a foamed molded product, comprising:
a convex part on a cavity surface, and
an undercut part disposed adjacent to the convex part,
wherein the foamed molded product is demolded in a direction from the undercut part to the convex part; and
wherein said mold further comprises an advancing mechanism for advancing the undercut part.

7. A mold according to Claim 6, wherein the advancing mechanism causes the undercut part to advance to the same position of or forward over the convex part.

8. A mold according to Claim 6 or 7, wherein the advancing mechanism is a cylinder.

9. A method of producing a foamed molded product, comprising the steps of:
providing a foaming resin material to a mold having a convex part on a cavity surface and an undercut part disposed adjacent to the convex part,
foaming the foaming resin material to provide a foamed molded product, and
demolding the foamed molded product in a direction from the undercut part to the convex part,
wherein the convex part is capable of rotating in a demolding direction, and the convex part is rotated in the demolding direction during demolding of the molded product.

10. A method according to Claim 9, wherein the convex part is rotated in the demolding direction together with the molded product to be demolded.

11. A method according to Claim 9, wherein the mold has a male mold and a female mold, and the convex part and the undercut part are disposed on the female mold.

12. A method according to Claim 11, wherein the convex part is capable of rotating freely when the male mold is released from the female mold.

13. A method according to Claim 9, wherein the resin is urethane.

14. A mold for molding a foamed molded product, comprising:
a convex part on a cavity surface, and
an undercut part disposed adjacent to the convex part,
wherein the foamed molded product is demolded in a direction from the undercut part to the convex part, and the convex part is capable of rotating in a demolding direction.

15. A mold according to Claim 14, wherein the mold has a male mold and a female mold, the convex part and the undercut part are disposed on the female mold, the convex part is disposed at an interface between the male and female molds, and the male mold presses the convex part, whereby the convex part is fixed when the male mold and the female mold are clamped.

16. A mold according to Claim 15, wherein the convex part is connected to the female mold in a free rotating mode.

17. A method of producing a foamed molded product, comprising the steps of:
providing a foaming resin material to a mold having a convex part on a cavity surface and an undercut part disposed adjacent to the convex part,
foaming the foaming resin material to provide a foamed molded product, and
demolding the foamed molded product in a direction from the undercut part to the convex part,
wherein the convex part is formed by attaching a separate member for forming the convex part to the mold, and the member for forming the convex part is taken out from the mold together with the molded product upon demolding, and the molded product is removed from the member for forming the convex part.

18. A method according to Claim 17, wherein the mold has a male mold and a female mold, and the member for forming the convex part is attached to a side surface of the cavity in the female mold.

19. A method according to Claim 18, the member for forming the convex part has a fastener holding part.

20. A method according to Claim 19, wherein a fastener is held by a fastener holding part in the member for forming the convex part before the member for forming the convex part is attached to the mold, the member holding the fastener is attached to the mold, and then the foaming step is conducted.

21. A method according to Claim 20, wherein the member for forming the convex part is held by the mold by means of magnetic force.

22. A method according to Claim 21, wherein the member for forming the convex part comprises a ferromagnetic material, and a magnet is disposed on the mold.

23. A method according to Claim 17, wherein a positioning part for the member for forming the convex part is disposed over the cavity surface of the mold.

24. A method according to any one of Claims 17 to 23, wherein the foamed molded product is urethane.

25. A mold component attachable/detachable to/from a cavity of a mold for use in a method of producing a foamed molded product comprising the steps of providing a foaming resin material to the mold having a convex part on the cavity surface and an undercut part disposed adjacent to the convex part, foaming the foaming resin material to provide a foamed molded product, and demolding the foamed molded product in a direction from the undercut part to the convex part,
wherein the component is a member for forming the convex part to the mold.

26. A mold product according to Claim 25, wherein the mold has a male mold and a female mold, and the member for forming the convex part is disposed on a side surface of the cavity in the female mold.

27. A mold component according to Claim 26, the member for forming the convex part has a fastener holding part having a recessed profile.

28. A mold component according to Claim 25, wherein the member for forming the convex part comprises a ferromagnetic material, and the member for forming the convex part is held by the mold by means of magnetic force.

29. A mold component according to Claim 25, wherein a magnet is disposed on the member for forming the convex part.

30. A mold component according to Claim 25, wherein the member for forming the convex part is polarized.

31. A mold component according to any one of Claims 25 to 30, wherein the mold component is disposed as a bar so that the mold component extends along the cavity surface of the mold.

32. A mold for use in a method of producing a foamed molded product comprising the steps of providing a foaming resin material to a mold having a convex part on a cavity surface and an undercut part disposed adjacent to the convex part, foaming the foaming resin material to provide a foamed molded product, and demolding the foamed molded product in a direction from the undercut part to the convex part,
wherein the convex part is formed by attaching a separate member for forming the convex part to the mold.

33. A mold according to Claim 32, wherein the mold has a male mold and a female mold, and the member for forming the convex part is attached to a side surface of the cavity in the female mold.

34. A mold component according to Claim 33, the member for forming the convex part has a fastener holding part having a recessed profile.

35. A mold component according to Claim 32, wherein the member for forming the convex part is held by the mold by means of magnetic force.

36. A mold component according to Claim 35, wherein the member for forming the convex part comprises a ferromagnetic material, an electromagnet is disposed on the mold, and the member for forming the convex part is held by the mold by means of magnetic force.

37. A mold component according to Claim 35, wherein a magnet is disposed on the member for forming the convex part, or the member for forming the convex part is polarized.

38. A mold component according to Claim 32 or 37, wherein a positioning part for the member for forming the convex part is disposed over the cavity surface of the mold.
